# EUROPÄISCHE PATENTSCHRIFT

(11) **EP 4 702 263 B1**
(45) Veröffentlichungstag und Bekanntmachung des Hinweises auf die Patenterteilung: **23.09.2026**
(21) Anmeldenummer: 24722198.9
(22) Anmeldetag: 25.04.2024
(51) Int. Cl.: F16F 9/49

(54) **SCHWINGUNGSDÄMPFER FÜR EIN KRAFTFAHRZEUG**
VIBRATION DAMPER FOR A MOTOR VEHICLE
AMORTISSEUR DE VIBRATIONS POUR UN VEHICULE MOTORISÉ

(30) Priorität: 27.04.2023 DE 102023110915; 27.04.2023 LU 103106
(43) Veröffentlichungstag der Anmeldung: 04.03.2026
(73) Patentinhaber: thyssenkrupp Bilstein GmbH, 58256 Ennepetal (DE); thyssenkrupp AG, 45143 Essen (DE)
(72) Erfinder: ROBRECHT, Jens, 53947 Nettersheim (DE)
(74) Vertreter: thyssenkrupp Intellectual Property GmbH
(86) Internationale Anmeldenummer: PCT/EP2024/061348
(87) Internationale Veröffentlichungsnummer: WO 2024/223723

(56) Entgegenhaltungen:
- DE-A1- 102015 121 140
- DE-A1- 19 829 765
- FR-A1- 2 995 048
- US-A1- 2021 115 998

## Beschreibung

Die Erfindung betrifft einen Schwingungsdämpfer für ein Kraftfahrzeug mit einer Druckanschlagsanordnung.

Aus der DE 10 2015 121 140 A1 ist ein hydraulischer Schwingungsdämpfer mit einem hydraulischen Druckanschlag bekannt. Ein hydraulischer Druckanschlag dient üblicherweise der zusätzlichen Dämpfung in der Druckstufe des Schwingungsdämpfers. Dazu taucht bei bekannten Schwingungsdämpfern ein Zusatzkolben in einen Druckanschlagsraum ein und erzeugt somit eine zusätzliche Dämpfung bei einer Bewegung der Kolbenstange in Druckrichtung. Die bei der Druckdämpfung zusammenwirkenden Bauteile müssen üblicherweise sehr genaue Fertigungstoleranzen einhalten, um beispielsweise Querkräfte auf die Kolbenstange auszugleichen. Die Fertigung dieser Bauteile ist daher üblicherweise sehr kostenintensiv. Des Weiteren ist der Bauraum für einen Druckanschlag innerhalb des Schwingungsdämpfers begrenzt.

Davon ausgehend ist es Aufgabe der vorliegenden Erfindung, einen Schwingungsdämpfer mit einer Druckanschlagsanordnung bereitzustellen, die kostengünstig herstellbar und einfach montierbar ist.

Diese Aufgabe wird erfindungsgemäß durch einen Schwingungsdämpfer mit den Merkmalen des unabhängigen Vorrichtungsanspruchs 1 gelöst. Vorteilhafte Weiterbildungen ergeben sich aus den abhängigen Ansprüchen.

Ein Schwingungsdämpfer für ein Fahrzeug umfasst nach einem ersten Aspekt ein mit Hydraulikfluid gefülltes Dämpferrohr, einen mit einer Kolbenstange verbundenen Arbeitskolben, der innerhalb des Dämpferrohrs hin und her bewegbar angeordnet ist, wobei der Innenraum des Dämpferrohrs durch den Arbeitskolben in einen ersten, kolbenstangenseitigen Arbeitsraum und einen zweiten, kolbenstangenfernen Arbeitsraum aufgeteilt ist. Der Schwingungsdämpfer umfasst vorzugsweise auch ein Verschlusspaket, das das Dämpferrohr kolbenstangeseitig fluiddicht abschließt. Des Weiteren umfasst der Schwingungsdämpfer einen Zusatzkolben, der an der Kolbenstange angebracht ist und eine Druckanschlagsanordnung mit einer innerhalb des Dämpferrohrs angebrachten Druckanschlagsaufnahme zur Aufnahme des Zusatzkolbens in der Druckstufe, wobei die Druckanschlagsanordnung einen Kolbenring aufweist, der innerhalb der Druckanschlagsaufnahme axial bewegbar angebracht ist und eine Unterbrechung aufweist. Die Unterbrechung ist vorzugsweise als Öffnung in dem ringförmigen Körper des Kolbenrings ausgebildet, sodass der Kolbenring vorzugsweise als C-Ring ausgebildet ist. Die Unterbrechung ist insbesondere umfangsmäßig ausgebildet und erstreckt sich beispielsweise als Schlitz in axialer Richtung über die gesamte Länge und Breite des Kolbenrings.

Der Kolbenring ist vorzugsweise nicht an der Kolbenstange und dem Zusatzkolben angebracht, sondern ausschließlich innerhalb der Druckanschlagsaufnahme. Vorzugsweise ist die Druckanschlagsaufnahme als axiale Führung des Kolbenrings ausgebildet.

Bei dem Schwingungsdämpfer handelt es sich beispielsweise um einen Einrohr- oder einen Mehrrohrschwingungsdämpfer. Beispielsweise umfasst ein Mehrrohrschwingungsdämpfer für ein Fahrzeug ein Außenrohr und ein koaxial zu diesem angeordnetes Innenrohr, wobei zwischen dem Außenrohr und dem Innenrohr ein Ausgleichsraum zur Aufnahme von Hydraulikfluid ausgebildet ist, und einen mit einer Kolbenstange verbundenen Arbeitskolben, der innerhalb des Innenrohrs hin und her bewegbar angeordnet ist, wobei der Innenraum des Innenrohrs durch den Arbeitskolben in einen ersten, kolbenstangenseitigen Arbeitsraum und einen zweiten, kolbenstangenfernen Arbeitsraum aufgeteilt ist. Der Ausgleichsraum ist vorzugsweise zumindest teilweise, insbesondere an dem oberen Ende, mit einem Gas gefüllt. Das Außenrohr bildet vorzugsweise zumindest teilweise das Gehäuse des Schwingungsdämpfers aus. Die Innenfläche des Innenrohrs ist vorzugsweise als Führung des Arbeitskolbens ausgebildet. Der Arbeitskolben weist vorzugsweise eine Ventileinrichtung auf, durch welche der erste und der zweite Arbeitsraum miteinander verbunden sind. Bei einem Einrohrschwingungsdämpfer ist vorzugsweise kein Außenrohr vorgesehen. Das Innenrohr wird als Dämpferrohr bezeichnet und nimmt, wie vorrangehend mit Bezug auf das Innenrohr beschrieben, die Kolbenstange und den Arbeitskolben auf.

Bei einem Mehrrohrschwingungsdämpfer weist der Schwingungsdämpfer insbesondere ein Verschlusspaket auf, das dazu ausgebildet und angeordnet ist, den Innenraum des Außenrohrs kolbenstangenseitig fluidtechnisch abzudichten. Das kolbenstangenseitige Ende des Innenrohrs ist vorzugsweise an dem Verschlusspaket befestigt. Gegenüberliegend zu dem Verschlusspaket, an dem kolbenstangenfernen Ende, sind der Ausgleichsraum und der zweite Arbeitsraum vorzugsweise mittels eines Bodenstücks fluidtechnisch abgedichtet. Der Ausgleichsraum ist vorzugsweise über Öffnungen in dem Innenrohr mit dem ersten oder zweiten Arbeitsraum fluidtechnisch verbunden. Beispielsweise ist der Ausgleichraum mittels eines Bodenelements zu dem Innenrohr abgedichtet. An dem Bodenstück ist insbesondere ein Bodenventil angeordnet, das insbesondere an dem kolbenstangenfernen Ende des Innenrohrs angebracht ist. Der zweite Arbeitsraum ist vorzugsweise über das Bodenventil mit dem Ausgleichsraum fluidtechnisch verbunden. Bei dem Bodenventil handelt es sich vorzugsweise um ein Rückschlagventil, das in beide oder nur eine Richtung durchströmbar ist. Beispielsweise ist das Bodenventil in Zugrichtung, bei einer Kolbenbewegung in Richtung aus dem Innenrohr hinaus, als Rückschlagventil ausgebildet und in Druckrichtung, bei einer Kolbenbewegung in das Innenrohr hinein, als ein kennungserzeugendes Ventil ausgebildet.

Bei einem Einrohrschwingungsdämpfer weist der Schwingungsdämpfer insbesondere ein Verschlusspaket auf, das dazu ausgebildet und angeordnet ist, den Innenraum des Dämpferrohrs kolbenstangenseitig fluidtechnisch abzudichten. Das kolbenstangenseitige Ende des Dämpferrohrs ist vorzugsweise an dem Verschlusspaket befestigt. Das Verschlusspaket ist vorzugsweise koaxial zu der Kolbenstange angeordnet und umschließt diese umfangsmäßig. Gegenüberliegend zu dem Verschlusspaket, an dem kolbenstangenfernen Ende, ist der Innenraum des Dämpferrohrs vorzugsweise mittels eines axial bewegbaren Dichtelement fluidtechnisch abgedichtet. Das Dichtelement trennt vorzugsweise einen sich in axialer Richtung daran anschließenden Gasraum von dem mit Hydraulikfluid gefüllten Arbeitsraum.

In der folgenden Beschreibung ist unter dem Begriff Schwingungsdämpfer sowohl ein Mehrrohrschwingungsdämpfer als auch ein Einrohrschwingungsdämpfer zu verstehen, wobei das Dämpferrohr das Innenrohr eines Mehrrohrschwingungsdämpfers ist.

Die Druckanschlagsanordnung ist vorzugsweise innerhalb des Dämpferrohrs, insbesondere in dem kolbenstangenfernen Endbereich des Dämpferrohrs angeordnet und umfasst vorzugsweise die Druckanschlagsaufnahme und den Kolbenring, der axial bewegbar innerhalb der Druckanschlagsaufnahme angebracht ist und vorzugsweise mit seiner äußeren Umfangsfläche zumindest teilweise oder vollständig an der Innenwand der Druckanschlagsaufnahme fluiddicht anliegt. Der Kolbenring ist vorzugsweise nicht an der Kolbenstange und dem Zusatzkolben befestigt. Der Kolbenring und die Kolbenstange sind insbesondere relativ zueinander bewegbar angebracht. Die Druckanschlagsanordnung umfasst auch einen Druckstufenarbeitsraum, der durch den Kolbenring innerhalb des Dämpferrohrs, insbesondere der Druckanschlagsaufnahme, abgetrennt ist. Der Zusatzkolben ist an der Kolbenstange positionsfest befestigt und in Druckrichtung relativ zu dem Arbeitskolben angeordnet.

Im Folgenden ist unter einer Bewegung in Zugrichtung eine Bewegung in Richtung des Verschlusspakets in den kolbenstangenseitigen Bereich des Stoßdämpfers und unter einer Bewegung in Druckrichtung eine Bewegung in Richtung des Bodenventils in den kolbenstangenfernen Bereich des Stoßdämpfers zu verstehen.

Gemäß einer ersten Ausführungsform weist die Druckanschlagsanordnung einen Druckstufenarbeitsraum auf, der durch den Kolbenring innerhalb der Druckanschlagsaufnahme abgetrennt ist und wobei die Unterbrechung zumindest teilweise oder vollständig einen Bypasskanal zwischen dem Druckstufenarbeitsraum und dem kolbenstangenfernen Arbeitsraum ausbildet. Der Druckstufenarbeitsraum ist vorzugsweise zwischen dem Kolbenring und dem Boden der insbesondere hohlzylinderförmigen Druckstufenaufnahme ausgebildet. Der Bypasskanal ist vorzugsweise durch die Unterbrechung in dem Kolbenring und den Raum zwischen dem Außendurchmesser des Zusatzkolbens und dem Innendurchmesser der Druckanschlagsaufnahme ausgebildet.

In der Druckstufe wird die Kolbenstange in Druckrichtung bewegt, sodass der Zusatzkolben an dem Kolbenring anliegt und diesen innerhalb der Druckstufenaufnahme in Druckrichtung bewegt. Der Bypasskanal ermöglicht eine Strömung von Hydraulikfluid aus dem Druckstufenarbeitsraum bei einer Bewegung des Kolbenrings in Druckrichtung und erzeugt somit die Dämpfung der Kolbenstangenbewegung in Druckrichtung.

Gemäß einer weiteren Ausführungsform ist der Kolbenring separat zu dem Zusatzkolben angeordnet, sodass der Zusatzkolben außerhalb der Druckanschlagsanordnung relativ zu dem Kolbenring bewegbar angeordnet ist. Der Kolbenring ist insbesondere nicht an dem Zusatzkolben angebracht. Die Bewegungen des Zusatzkolbens und des Kolbenrings sind ausschließlich innerhalb der Druckanschlagsaufnahme gekoppelt. Die Anordnung des Kolbenrings separat zu dem Zusatzkolben innerhalb der Druckanschlagsaufnahme bietet den Vorteil einer einfachen und schnellen Montage des Kolbenrings.

Gemäß einer weiteren Ausführungsform weist die Druckanschlagsanordnung ein Federelement auf, das innerhalb der Druckanschlagsaufnahme angeordnet ist und an dem Kolbenring anliegt. Das Federelement ist vorzugsweise zwischen dem Kolbenring und dem Boden der hohlzylinderförmigen Druckanschlagsaufnahme angeordnet und liegt an diesen mit seinen jeweiligen Endbereichen an. Bei dem Federelement handelt es sich beispielsweise um eine Schraubenfeder. Das Federelement liegt vorzugsweise in dem entspannten oder leicht vorgespannten Zustand an dem Kolbenring und dem Boden der Druckanschlagsaufnahme an. Durch das Federelement wird der Kolbenring bei einer Bewegung des Zusatzkolbens in Zugrichtung wieder in die Ausgangsposition, die sich vorzugsweise an dem in Zugrichtung weisenden Ende der Druckanschlagsaufnahme befindet, bewegt.

Gemäß einer weiteren Ausführungsform weist die Druckanschlagsaufnahme einen Verbindungsbereich auf, an dem die Druckanschlagsaufnahme insbesondere positionsfest, mit dem Dämpferrohr verbunden ist, insbesondere mittels einer kraftschlüssigen formschlüssigen und/ oder stoffschlüssigen Verbindung. Der Verbindungsbereich ist vorzugsweise an dem in Richtung des Arbeitskolbens weisenden Endbereich der Druckanschlagsaufnahme ausgebildet und insbesondere fluiddicht mit dem Innenrohr verbunden. Insbesondere weist der Verbindungsbereich der Druckanschlagsaufnahme einen größeren Außendurchmesser auf als der übrige, sich von dem Verbindungsbereich in Druckrichtung erstreckende Bereich der Druckanschlagsaufnahme. Beispielsweise weist die Druckanschlagsaufnahme eine Mehrzahl von Verbindungsbereichen auf, die vorzugsweise in Umfangsrichtung zueinander beabstandet angeordnet sind, sodass Hydraulikfluid zwischen benachbarten Verbindungsbereichen strömbar ist. Die Druckanschlagsaufnahme weist außerhalb des Verbindungsbereich vorzugsweise einen Außendurchmesser auf der geringer ist als der Innendurchmesser des Dämpferrohrs, sodass zwischen dem Dämpferrohr und der Druckanschlagsaufnahme das Hydraulikfluid strömbar ist. Vorzugsweise ist die Druckanschlagsaufnahme formschlüssig, stoffschlüssig und/ oder kraftschlüssig mit dem Dämpferrohr verbunden. Insbesondere ist die Druckanschlagsaufnahme an den Verbindungsbereichen mittels Punktschweißungen an dem Dämpferrohr angebracht. Die Befestigung der Druckanschlagsaufnahme an einzelnen Verbindungsbereichen, insbesondere über Punktschweißungen, bietet eine einfache Möglichkeit der Befestigung, wobei gleichzeitig eine Fluidströmung zwischen den Verbindungsbereichen ermöglicht wird.

Gemäß einer weiteren Ausführungsform ist zwischen der Druckanschlagsaufnahme und dem Dämpferrohr ein Ringraum ausgebildet, der von dem Hydraulikfluid durchströmbar ist. Der Ringraum bildet vorzugsweise eine Fluidverbindung zwischen dem kolbenstangenfernen Arbeitsraum und dem Bodenventil, wobei die Druckstufenaufnahme umgangen wird. Im Normalbetrieb, wobei der Zusatzkolben nicht in der Druckanschlagsaufahme ist, stellt die Druckanschlagsaufnahme so kein Strömungshindernis dar und beeinflusst das Verhalten des Schwingungsdämpfers unwesentlich. Auch in dem Betriebszustand, in welchem der Zusatzkolben innerhalb der Druckanschlagsaufnahme ist, stellt die Druckanschlagsaufnahme kein Strömungshindernis dar, sodass eine Strömung zum Bodenventil ermöglicht wird.

Gemäß einer weiteren Ausführungsform ist die Druckanschlagsaufnahme hohlzylinderförmig ausgebildet.

Gemäß einer weiteren Ausführungsform ist der Kolbenring aus einem Kunststoff ausgebildet. Vorzugsweise ist der Kolbenring mittels eines Kunststoffspritzguss hergestellt. Eine Ausbildung des Kolbenrings aus einem Kunststoff bietet eine kostengünstige Herstellung des Kolbenrings.

Gemäß einer weiteren Ausführungsform weist der Kolbenring einen ersten Ringbereich und einen sich in Druckrichtung daran anschließenden zweiten Ringbereich auf und wobei der erste Ringbereich einen geringeren Innendurchmesser aufweist als der zweite Ringbereich. Vorzugsweise bildet der erste Ringbereich das in Zugrichtung weisende Ende des Kolbenrings und der zweite Ringbereich vorzugsweise das in Druckrichtung weisende Ende des Kolbenrings aus. Der Kolbenring besteht vorzugsweise ausschließlich aus dem ersten und dem zweiten Ringbereich. Der erste und der zweite Ringbereich weisen vorzugsweise jeweils einen konstanten Innendurchmesser auf. Insbesondere weisen der erste und der zweite Ringbereich einen identischen Außendurchmesser auf, der insbesondere konstant ist. Vorzugsweise weist der Kolbenring einen L-förmigen Querschnitt auf. Die Ringbereiche weisen vorzugsweise jeweils einen im Wesentlichen rechteckigen Querschnitt auf. Die in Richtung des Zusatzkolbens weisende Stirnseite des ersten Ringbereichs bildet vorzugsweise eine Anlagefläche für den Zusatzkolben in der Druckstufe. Die Innenseite des zweiten Ringbereichs bildet insbesondere eine Anlagefläche für das Federelement aus. Der Außendurchmesser des Federelements ist vorzugsweise größer oder gleich dem Innendurchmesser des Kolbenrings, insbesondere des zweiten Ringbereichs des Kolbenrings, sodass das Federelement beispielsweise formschlüssig und/ oder kraftschlüssig mit dem Kolbenring verbunden ist.

Gemäß einer weiteren Ausführungsform weist der Zusatzkolben einen Außendurchmesser auf, der geringer ist als der Innendurchmesser der Druckanschlagsaufnahme, sodass zwischen der Druckanschlagsaufnahme und dem Zusatzkolben ein Hydraulikfluid strömbar ist. Der fluiddichte Abschluss des Druckstufenarbeitsraums wird vorzugsweise ausschließlich zwischen dem Kolbenring und dem Zusatzkolben erreicht.

Der Zusatzkolben umfasst vorzugsweise einen Ventilkörper mit zumindest einer oder einer Mehrzahl von axialen Durchlassbohrungen, die von Ventilscheiben zumindest teilweise oder vollständig kolbenstangenseitig abgedeckt werden. Die Ventilscheiben sind vorzugsweise derart vorgespannt, dass sie eine Strömung aus dem Druckstufenarbeitsraum durch die Durchlassbohrungen in den zweiten Arbeitsraum ab einem bestimmten Druck in dem Druckstufenarbeitsraum erlauben. Die Durchlassbohrungen zusammen mit den Ventilscheiben verhindern somit einen über einen bestimmten Wert hinausgehenden Druckanstieg in dem Druckstufenarbeitsraum. Der Bypasskanal ist zusätzlich zu den Durchlassbohrungen vorgesehen und bietet einen zusätzlichen Strömungskanal bei einer Bewegung des Zusatzkolbens in Druckrichtung. Der Bypasskanal ist insbesondere zwischen dem Ventilkörper und der Druckanschlagsaufnahme, sowie durch die Unterbrechung ausgebildet.

Der Ventilkörper und die Ventilscheiben sind vorzugsweise über ein Verbindungselement, wie ein Schraubenelement oder ein Niet, beispielhaft mit einer Unterlegscheibe, verbunden.

Gemäß einer weiteren Ausführungsform weist der Kolbenring eine Mehrzahl von Ausnehmungen insbesondere zusätzlich zu der Unterbrechung, auf. Die Ausnehmungen sind beispielsweise in der Außenseite des Kolbenrings ausgebildet und vorzugsweise in Umfangsrichtung insbesondere gleichmäßig zueinander beabstandet. Vorzugsweise sind gegenüberliegende Ausnehmungen identisch ausgebildet. Die Ausnehmungen bilden insbesondere zusätzliche Strömungsdurchlässe für das Hydraulikfluid.

Gemäß einer weiteren Ausführungsform weist die Druckanschlagsaufnahme einen Axialanschlag auf, der einen Anschlag zur Begrenzung der Bewegung des Kolbenrings in axialer Richtung bildet. Die Druckanschlagsaufnahme weist beispielhaft eine Mehrzahl von Axialanschlägen auf. Der Axialanschlag ist beispielsweise als sich radial nach innen erstreckender Vorsprung ausgebildet und bildet einen Anschlag zur Begrenzung der Bewegung des Kolbenrings in axialer Richtung, insbesondere in Zugrichtung. Die Druckanschlagsaufnahme weist vorzugsweise zumindest einen, zwei, drei oder mehr Axialanschläge auf, die beispielsweise in Umfangsrichtung gleichmäßig zueinander beabstandet angeordnet sind.

Gemäß einer weiteren Ausführungsform weist die Druckanschlagsaufnahme eine Bypassöffnung auf, die mit dem Zusatzkolben, und/ oder dem Außendurchmesser des Kolbenrings einen Bypassweg ausbildet. Die Bypassöffnung ist vorzugsweise an dem kolbenstangenseitigen Ende der Druckanschlagsaufnahme ausgebildet. Insbesondere erstrecken sich die Bypassöffnung von dem kolbenstangenseitigen Ende bis maximal zu 70%, insbesondere 50% der Länge der Druckanschlagsaufnahme. Der Bypassweg ist vorzugsweise derart ausgebildet und angeordnet, dass dieser den Druckstufenarbeitsraum und den kolbenstangenfernen Arbeitsraum des Dämpferrohrs fluidtechnisch miteinander verbindet. Vorzugsweise wird der Bypassweg von dem Außendurchmesser des Kolbenrings, dem Außendurchmesser des Zusatzkolbens und der Druckanschlagsaufnahme, insbesondere der zumindest einen Bypassöffnung in der Druckanschlagsaufnahme begrenzt, sodass das Hydraulikfluid vorzugsweise an dem Zusatzkolben vorbei in den kolbenstangenfernen Arbeitsraum strömt. Ein solcher Bypassweg ermöglicht eine genaue Einstellung der Dämpfung des Zusatzkolbens in der Druckstufe, insbesondere in Abhängigkeit der Kolbenstangenposition. Durch eine Bypassöffnung an dem kolbenstangenseitigen Ende der Druckanschlagsaufnahme wird der Bypassweg bei einer Aktivierung der Druckanschlagsanordnung, insbesondere bei einer Bewegung des Kolbenrings in Druckrichtung, direkt erzeugt, wodurch zunächst eine weiche Dämpfung der Druckstufe einstellbar ist. Die Bypassöffnung ist vorzugsweise derart ausgebildet, dass sie lediglich eine Einbuchtung an der Innenwand der Druckanschlagsaufnahme ausbildet, sich aber nicht durch die Wandung der Druckanschlagsaufnahme erstreckt.

Gemäß einer weiteren Ausführungsform ist die Bypassöffnung derart ausgebildet, dass sich ihr Strömungsquerschnitt in Druckrichtung verringert. Vorzugsweise ist die Bypassöffnung als stirnseitige Einkerbung in der Druckanschlagsaufnahme ausgebildet, wobei sich die Fläche der Bypassöffnung in Druckrichtung entlang der Druckanschlagsaufnahme verringert. Es ist ebenfalls denkbar, dass sich die Bypassöffnung von der Höhe der Verbindungsbereiche aus in Druckrichtung erstreckt. Der durch die Bypassöffnung ausgebildete Bypassweg weist einen Strömungsquerschnitt auf, der sich bei einer Bewegung des Zusatzkolbens in Druckrichtung verringert. Dadurch wird die Dämpfung des Zusatzkolbens bei einer Bewegung in Druckrichtung erhöht und somit beispielsweise eine progressive Dämpfung erreicht. In dem kolbenstangenfernen Bereich der Druckanschlagsaufnahme sind vorzugsweise keine Bypassöffnungen ausgebildet. Somit wird vor dem Anschlag des Zusatzkolbens an den Boden der Druckanschlagsaufnahme, insbesondere vor dem Ende des maximalen Hubes des Schwingungsdämpfers in Druckstufe, eine maximale Dämpfung eingestellt.

Beispielsweise weist die Druckanschlagsaufnahme eine Mehrzahl von Bypassöffnungen auf. Der Bypassweg wird vorzugsweise von allen Bypassöffnungen ausgebildet. Beispielsweise sind die Bypassöffnungen in Umfangsrichtung zueinander versetzt angeordnet. Insbesondere sind die Bypassöffnungen über den Umfang der Druckanschlagsaufnahme homogen verteilt, insbesondere gleichmäßig zueinander beabstandet angeordnet. Einander umfangsmäßig gegenüberliegende oder alle Bypassöffnungen sind insbesondere identisch ausgebildet. Dies ermöglicht eine möglichst gleichmäßige und progressive Dämpfung des Zusatzkolbens über die in Richtung des Bodenstücks weisende Fläche des Kolbenrings.

Gemäß einer weiteren Ausführungsform weist die Druckanschlagsaufnahme zumindest eine oder eine Mehrzahl von Ausnehmungen auf, die sich von dem kolbenstangenseitigen Ende der Druckanschlagsaufnahme in axialer Richtung erstrecken. Vorzugsweise sind die Verbindungsbereiche zur Verbindung der Druckanschlagsaufnahme mit dem Innenrohr in Umfangsrichtung zwischen den Ausnehmungen angeordnet. Die Ausnehmungen sind beispielsweise halbkreisförmig ausgebildet und insbesondere in Umfangrichtung vorzugsweise gleichmäßig zueinander beabstandet angeordnet. Beispielsweise sind die Ausnehmungen identisch ausgebildet. Die Ausnehmungen dienen vorzugsweise der Beabstandung der Verbindungsbereiche zueinander.

### Beschreibung der Zeichnungen

Die Erfindung ist nachfolgend anhand mehrerer Ausführungsbeispiele mit Bezug auf die beiliegenden Figuren näher erläutert.
- Fig. 1: zeigt eine schematische Darstellung eines Schwingungsdämpfers in einer Längsschnittansicht gemäß einem Ausführungsbeispiel.
- Fig. 2: zeigt eine schematische Darstellung eines Teilausschnitts eines Schwingungsdämpfers in einer Längsschnittansicht gemäß einem weiteren Ausführungsbeispiel.
- Fig. 3: zeigt eine schematische Darstellung eines Teilausschnitts eines Schwingungsdämpfers in der Druckstufe in einer Längsschnittansicht gemäß einem weiteren Ausführungsbeispiel.
- Fig. 4: zeigt eine schematische Darstellung eines Kolbenrings in einer perspektivischen Ansicht gemäß einem weiteren Ausführungsbeispiel.
- Fig. 5: zeigt eine schematische Darstellung eines Teilausschnitts einer Druckanschlagsaufnahme in einer perspektivischen Ansicht gemäß einem weiteren Ausführungsbeispiel.
- Fig. 6: zeigt eine schematische Darstellung eines Teilausschnitts einer Druckanschlagsaufnahme in einer perspektivischen Ansicht gemäß einem weiteren Ausführungsbeispiel.

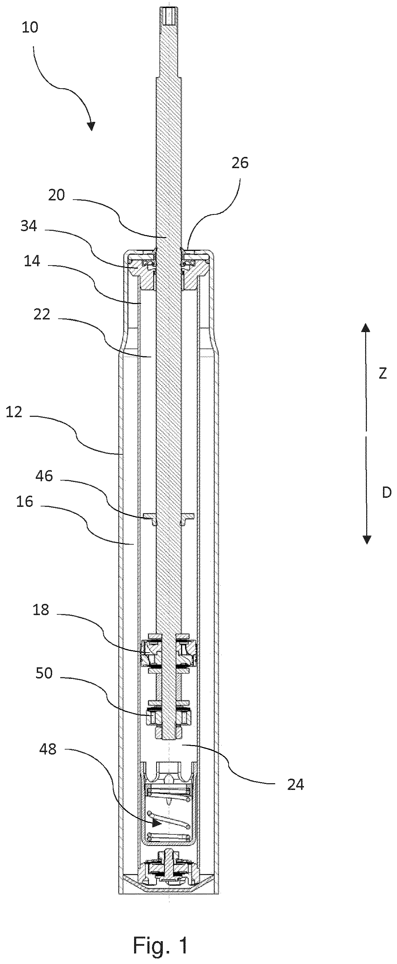

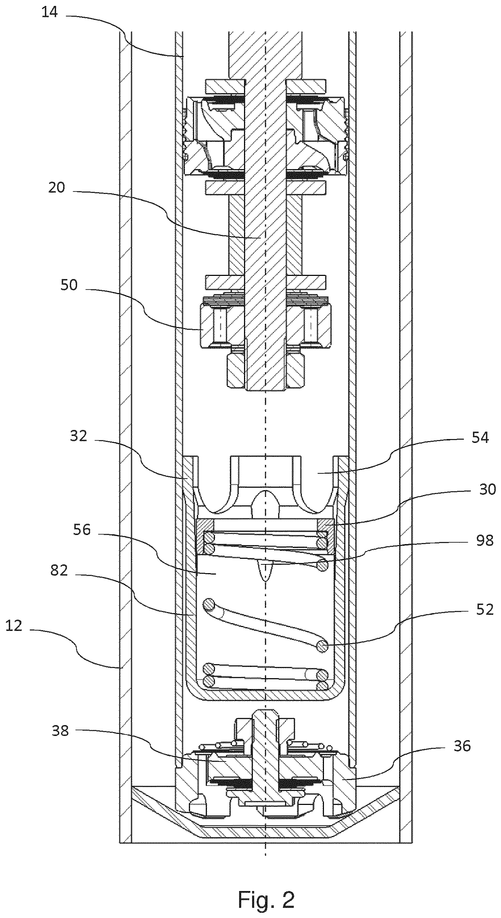

Fig. 1 zeigt einen Schwingungsdämpfer 10, wobei es sich bei dem Schwingungsdämpfer 10 beispielhaft um einen Mehrrohrschwingungsdämpfer, beispielshaft um einen Zwei - Rohrschwingungsdämpfer, handelt. Fig. 2 zeigt einen Ausschnitt des Schwingungsdämpfers der Fig. 1. Der Schwingungsdämpfer 10 weist ein Außenrohr 12 auf, das eine Außenfläche, insbesondere ein Gehäuse, des Schwingungsdämpfers 10 ausbildet. Innerhalb des Außenrohrs 12 ist koaxial zu diesem ein Dämpferrohr 14 angeordnet, das ebenfalls als Innenrohr 14 bezeichnet wird. Zwischen dem Außenrohr 12 und dem Innenrohr 14 ist ein Ausgleichsraum 16 ausgebildet, der vorzugsweise zumindest teilweise oder vollständig mit einem Hydraulikfluid gefüllt ist. Beispielsweise ist der Ausgleichsraum 16 teilweise mit einem Gas gefüllt.

Innerhalb des Innenrohrs 14 ist ein mit einer Kolbenstange 20 verbundener Arbeitskolben 18 derart angeordnet, dass er innerhalb des Innenrohrs 14 bewegbar ist, wobei das Innenrohr 14 vorzugsweise als Führung des Arbeitskolbens 18 ausgebildet ist. Der Arbeitskolben 18 weist vorzugsweise eine Ventileinrichtung auf. Beispielsweise umfasst die Ventileinrichtung ein Zugstufenventil zur Dämpfung der Kolbenbewegung in der Zugstufe und ein Druckstufenventil zur Dämpfung der Kolbenbewegung in der Druckstufe. Vorzugsweise sind die Ventile jeweils durch eine Durchlassöffnung durch den Kolben und ein Ventilscheibenpaket gebildet. Der Arbeitskolben 18 teilt den Innenraum des Innenrohrs 14 in einen ersten Arbeitsraum 22, der kolbenstangenseitig angeordnet ist und einen zweiten Arbeitsraum 24, der kolbenstangenfern angeordnet ist. Die Kolbenstange 20 ist vorzugsweise mit ihrem aus dem Dämpferrohr 14 herausragenden Ende mit der Fahrzeugkarosserie verbindbar. Der Arbeitskolben 18 ist an der Kolbenstange vorzugsweise positionsfest befestigt. Der Schwingungsdämpfer 10 umfasst einen Zusatzkolben 50 der ebenfalls an der Kolbenstange 20 positionsfest angebracht ist, wobei der Zusatzkolben 50 an einem sich in Druckrichtung D an den Arbeitskolben anschließenden Bereich der Kolbenstange 20 angebracht ist. Vorzugsweise ist der Zusatzkolben 50 an dem sich innerhalb des Dämpferrohrs 14 angeordneten Ende der Kolbenstange 20 angebracht. Zwischen dem Arbeitskolben 18 und dem Zusatzkolben 50 ist beispielhaft eine insbesondere hülsenförmige, Verstärkung angebracht, die koaxial zu der Kolbenstange 20 um diese herum angebracht und an der Kolbenstange 20 befestigt ist.

Der Innenraum des Außenrohrs 12 ist kolbenstangenseitig mittels eines Verschlusspakets 34 fluidtechnisch abgedichtet. Gegenüberliegend zu dem Verschlusspaket 34, an dem kolbenstangenfernen Ende, ist der Ausgleichsraum 16 mittels eines Bodenstücks 36 fluidtechnisch abgedichtet. Das Innere des Dämpferrohrs 14, insbesondere der zweite Arbeitsraum 24 ist vorzugsweise ebenfalls mittels des Bodenstücks 36 fluidtechnisch abgedichtet. Es ist ebenfalls denkbar, dass ein weiteres Bodenelement separat zu dem Bodenstück vorgesehen ist, das das Außenrohr 12 abdichtet. An dem Bodenstück 36 ist beispielhaft ein Bodenventil 38 angeordnet, das insbesondere an dem kolbenstangenfernen Ende des Innenrohrs 14 angebracht ist. Bei dem Bodenventil 38 handelt es sich vorzugsweise um ein Rückschlagventil, das in beide oder nur eine Richtung durchströmbar ist. Der zweite Arbeitsraum 24 ist vorzugsweise über das Bodenventil 38 mit dem Ausgleichsraum 16 fluidtechnisch verbunden. Das kolbenstangenseitige Ende des Innenrohrs 14 ist vorzugsweise an dem Verschlusspaket 34 befestigt.

Das Außenrohr 12 ist vorzugsweise zylindrisch ausgebildet und weist optional an dem kolbenstangenseitigen Endbereich einen geringeren Durchmesser auf. Das Außenrohr 12 ist beispielhaft über eine an dem kolbenstangenseitigen Ende des Außenrohr 14 angebrachte Dichtung 26 fluidtechnisch zu der Kolbenstange 20 abgedichtet.

Der Schwingungsdämpfer 10 umfasst beispielhaft einen Zuganschlag 46, der an der Kolbenstange 20 positionsfest angebracht ist. Der Zuganschlag 46 ist beispielhaft ringförmig ausgebildet und zwischen dem Arbeitskolben 18 und dem Verschlusspakt 34 innerhalb des ersten Arbeitsraums 22 angeordnet. Vorzugsweise bildet der Zuganschlag 46, insbesondere die in Richtung des Verschlusspakets 34 weisende Stirnfläche eine Anschlagfläche zur Anlage an das Verschlusspaket 34 aus, wenn sich die Kolbenstange in Zugrichtung Z bewegt. Der Zuganschlag 46 dient der Begrenzung der Bewegung der Kolbenstange in Zugrichtung Z. Vorzugsweise ist zwischen dem Zuganschlag 46 und der Innenwand des Dämpferrohrs 14 ein Strömungsspalt ausgebildet, durch welchen bei einer Kolbenstangenbewegung das Hydraulikfluid strömbar ist.

Der Schwingungsdämpfer 10 umfasst beispielhaft eine Druckanschlagsanordnung 48, die innerhalb des Dämpferrohrs 14, insbesondere in dem kolbenstangenfernen Endbereich des Dämpferrohrs 14 angeordnet ist. Die Druckanschlagsanordnung 48 umfasst vorzugsweise eine Druckanschlagsaufnahme 82 und einen Kolbenring 30, der axial bewegbar innerhalb der Druckanschlagsaufnahme 82 angebracht ist und vorzugsweise mit seiner äußeren Umfangsfläche zumindest teilweise oder vollständig an der Innenwand der Druckanschlagsaufnahme 82 fluiddicht anliegt. Vorzugsweise ist der Kolbenring 30 derart axial bewegbar innerhalb der Druckanschlagsaufnahme 82 angebracht, dass die Druckanschlagsaufnahme 82 eine Führung des Kolbenrings 30 ausbildet. Der Kolbenring 30 ist beispielhaft nicht an der Kolbenstange 20 und dem Zusatzkolben 50 befestigt. Die Druckanschlagsanordnung 48 umfasst insbesondere auch ein Federelement 52, das vorzugsweise zwischen dem Kolbenring 30 und dem Boden der hohlzylinderförmigen Druckanschlagsaufnahme 82 angeordnet ist und an diesen mit seinen jeweiligen Endbereichen anliegt. Bei dem Federelement 52 handelt es sich beispielsweise um eine Schraubenfeder. Der Kolbenring 30 trennt insbesondere einen Druckstufenarbeitsraum 56 innerhalb der Druckanschlagsaufnahme 82 ab. Der Druckstufenarbeitsraum 56 ist vorzugsweise vollständig in Druckrichtung D hinter dem Kolbenring 30, innerhalb der Druckanschlagsaufnahme 82 angeordnet. Die Druckanschlagsaufnahme 82 ist beispielsweise hohlzylinderförmig ausgebildet und insbesondere an dem Innenrohr 14 angebracht. Vorzugsweise liegt die Druckanschlagsaufnahme 82 mit ihrem Außendurchmesser teilweise an der Innenwand des Dämpferrohrs 14 an. Die Druckanschlagsaufnahme 82 weist beispielhaft an ihrem in Richtung des Arbeitskolbens 18 weisenden Endbereich einen Verbindungsbereich 32 auf, der, vorzugsweise positionsfest, mit dem Innenrohr 14 verbunden ist. Insbesondere weist der Verbindungsbereich 32 der Druckanschlagsaufnahme 82 einen größeren Außendurchmesser auf als der übrige, sich insbesondere von dem Verbindungsbereich in Druckrichtung D erstreckende Bereich der Druckanschlagsaufnahme 82. Die Druckanschlagsaufnahme 82 weist außerhalb des Verbindungsbereichs vorzugsweise einen Außendurchmesser auf der geringer ist als der Innendurchmesser des Dämpferrohrs 14, sodass zwischen dem Dämpferrohr 14 und der Druckanschlagsaufnahme 82 das Hydraulikfluid strömbar ist. Vorzugsweise ist die Druckanschlagsaufnahme 82 formschlüssig, stoffschlüssig und/ oder kraftschlüssig mit dem Innenrohr 14 verbunden.

Der Kolbenring 30 ist insbesondere axial zwischen dem Zusatzkolben 50 und dem Boden der Druckanschlagsaufnahme 82 angeordnet. Das Federelement 52 liegt in dem entspannten oder leicht vorgespannten Zustand an dem Kolbenring 30 und dem Boden der Druckanschlagsaufnahme 82 an.

Im Betrieb des Stoßdämpfers 10 und bei einer Bewegung der Kolbenstange 20 in Druckrichtung D wird der Zusatzkolben 50 in die Druckanschlagsaufnahme 82 hinein bewegt und drückt den Kolbenring 30 in Druckrichtung D in Richtung des Bodens der Druckanschlagsaufnahme 82, wobei das Federelement 52 gespannt wird. Bei einer anschließenden Bewegung der Kolbenstange 20 in Zugrichtung Z wird der Kolbenring 30 mittels des Federelements 52 in Zugrichtung Z gedrückt und vorzugsweise in seine Ausgangsposition am geöffneten Endbereich der Druckanschlagsaufnahme 82 bewegt.

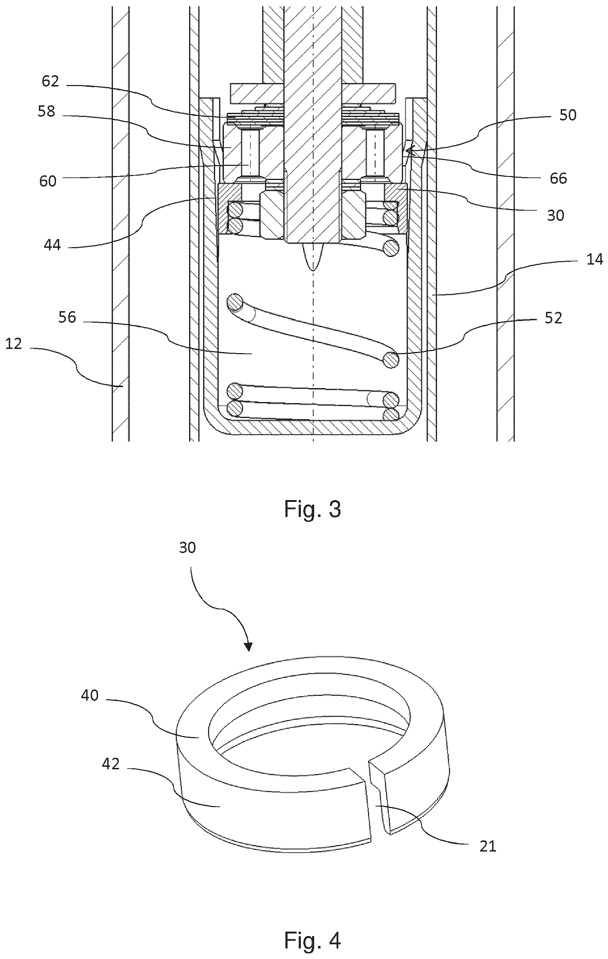

Fig. 3 zeigt einen Teilausschnitt eines Stoßdämpfer 10 gemäß einem weiteren Ausführungsbeispiel, wobei Fig. 3 den Stoßdämpfer 10 in einer Stellung zeigt, in welcher der Zusatzkolben 50 an dem Kolbenring 30 anliegt. Die wesentlichen Elemente der Fig. 3 entsprechenden denen der Fig. 1 und 2.

Fig. 4 zeigt einen Kolbenring 30. Beispielhaft ist der Kolbenring 30 als C-Ring ausgebildet, wobei der Kolbenring 30 eine vorzugsweise als Schlitz ausgebildete Öffnung, insbesondere eine umfangsmäßige Unterbrechung 21 in dem ringförmigen Körper des Kolbenrings 30 aufweist, die eine vollständige umfangsmäßige Unterbrechung des ringförmigen Kolbenrings 30 ist. Vorzugsweise weist der Kolbenring 30 einen L-förmigen Querschnitt auf. Insbesondere weist der Kolbenring 30 einen ersten Ringbereich 40 und einen sich in Druckrichtung D daran anschließenden zweiten Ringbereich 42 auf, die jeweils einen im Wesentlichen rechteckigen Querschnitt aufweisen. Der erste Ringbereich 40 erstreckt sich vorzugsweise in radialer Richtung nach Innen über den zweiten Ringbereich 42 hinaus. Insbesondere weist der erste Ringbereich 40 einen geringeren Innendurchmesser auf als der zweite Ringbereich 42. Die in Richtung des Zusatzkolbens 50 weisende Stirnseite des ersten Ringbereichs 40 bildet vorzugsweise eine Anlagefläche für den Zusatzkolben 50 in der Druckstufe. Vorzugsweise besteht der Kolbenring 30 ausschließlich aus dem ersten und dem zweiten Ringbereich 40, 42. Die Öffnung erstreckt sich insbesondere in axialer Richtung, vorzugswiese parallel zur Mittelachse des Kolbenrings 30, durch den ersten und den zweiten Ringbereich 40, 42 hindurch und bildet vorzugsweise eine vollständige Unterbrechung des ringförmigen Kolbenrings 30 aus. Die Innenseite des zweiten Ringbereichs 42 bildet beispielhaft eine Anlagefläche für das Federelement 52 aus. Der Außendurchmesser des Federelements 52 ist vorzugsweise größer oder gleich dem Innendurchmesser des Kolbenrings 30, insbesondere des zweiten Bereichs 42 des Kolbenrings 30, sodass das Federelement 52 beispielsweise formschlüssig und/ oder kraftschlüssig mit dem Kolbenring 30 verbunden ist. Vorzugsweise bildet die in Richtung des Federelements 52 weisende Fläche des ersten Ringbereichs 40 ebenfalls eine Anlagefläche des Federelements 52 aus.

In der in Fig. 3 gezeigten Position liegt der Zusatzkolben 50 an dem Kolbenring 30 an. In einer in Fig. 3 nicht dargestellten Stellung, wird die Kolbenstange 20 weiter in Druckrichtung D bewegt, wobei der Zusatzkolben 50 und der Kolbenring 30 mit der Kolbenstange 20 in Druckrichtung D bewegt und das Federelement 52 gespannt wird, sodass es den Kolbenring 30 mit einer sich vorzugsweise bei einer Bewegung in Druckrichtung D vergrößernden Kraft in Zugrichtung Z beaufschlagt. Zusätzlich erfolgt vorzugsweise eine Abdichtung des Zusatzkolbens an dem Kolbenring, sodass bei einer Bewegung des Kolbenrings 30 in Druckrichtung zusätzlich die gesamte Fläche aus Kolbenring, Zusatzkolben und Kolbenstange mit einer aus dem Hydraulikdruck resultierenden Kraft beaufschlagt werden.

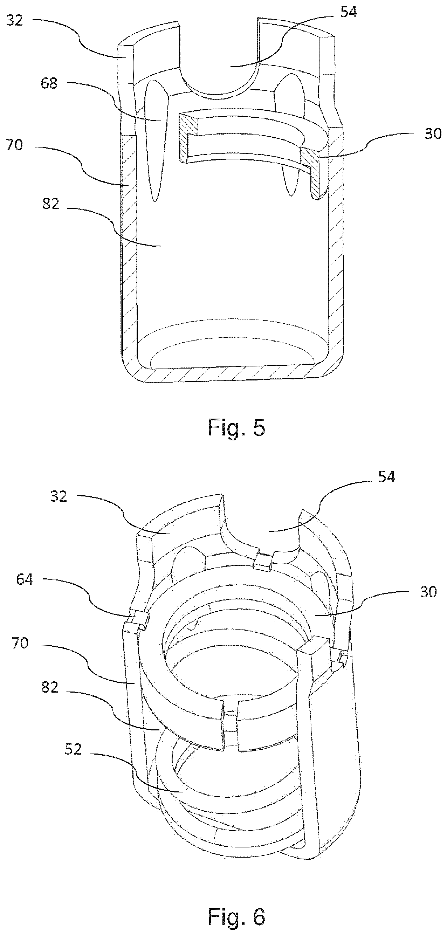

Die Fig. 1 bis 3 zeigen auch einen Bypassweg 44, durch welchen Hydraulikfluid von dem Druckstufenarbeitsraum 56 in den kolbenstangenfernen Arbeitsraum 24 strömbar ist. Der Bypassweg 44 wird im Detail mit Bezug auf die Figur 5 beschrieben.

Der Zusatzkolben 50 umfasst einen Ventilkörper 58 mit zumindest einer oder einer Mehrzahl von axialen Durchlassbohrungen 60, die von Ventilscheiben 62 abgedeckt werden. Die Ventilscheiben 62 sind an dem kolbenstangenseitigen Ende des Ventilkörpers 58 angebracht und derart vorgespannt, dass sie eine Strömung aus dem Druckstufenarbeitsraum 56 durch die Durchlassbohrungen 60 in den zweiten Arbeitsraum 24 ab einem bestimmten Druck in dem Druckstufenarbeitsraum 56 erlauben. Die Durchlassbohrungen 60 zusammen mit den Ventilscheiben 62 verhindern somit einen über einen bestimmten Wert hinausgehenden Druckanstieg in dem Druckstufenarbeitsraum 56. Der Ventilkörper 58 oder eine nicht dargestellte an dem Ventilkörper angebrachte Scheibe liegt vorzugsweise fluiddicht an dem Kolbenring an. Der Kolbenring 30 ist derart ausgebildet und angeordnet, dass er zusätzlich mit der Innenwand des Dämpferrohrs 14 fluiddicht abschließt. Der Zusatzkolben 50 weist vorzugsweise einen Außendurchmesser auf, der geringer ist als der Innendurchmesser der Druckanschlagsaufnahme 82, sodass zwischen der Druckanschlagsaufnahme 82 und dem Zusatzkolben 50 ein Hydraulikfluid strömbar ist. Die Unterbrechung 21 in dem Kolbenring 30 bildet vorzugsweise einen Bypasskanal 66 zwischen dem Druckstufenarbeitsraum 56 und dem kolbenstangenfernen Arbeitsraum 24 aus. Der Bypasskanal 66 umfasst vorzugsweise die Unterbrechung 21 in dem Kolbenring 30 und den Raum zwischen dem Zusatzkolben 50 und der Druckanschlagsaufnahme 82.

Fig. 5 zeigt einen Teilausschnitt des Kolbenrings 30 in der Druckanschlagsaufnahme 82. Die Druckanschlagsaufnahme 82 ist beispielhaft zylinderförmig ausgebildet und weist eine Bypassöffnung 68 auf, die sich durch die Wand 70 der Druckanschlagsaufnahme 82 erstreckt und einen Bypassweg 44 für Hydraulikfluid zwischen dem Kolbenring 30 und insbesondere dem Zusatzkolben 50 und der Innenwand des Dämpferrohrs 14 ausbildet. Die Druckanschlagsaufnahme 82 weist des Weiteren beispielsweise zumindest eine oder eine Mehrzahl von Ausnehmungen 54 auf, die sich von dem kolbenstangenseitigen Ende der Druckanschlagsaufnahme 82 in axialer Richtung erstrecken. Die Ausnehmungen 54 weisen vorzugsweise einen halbkreisförmigen Endbereich auf und erstrecken sich insbesondere zumindest über die axiale Länge des Verbindungsbereichs 32 oder über diesen hinaus. Beispielhaft sind die Ausnehmungen 54 in Umfangsrichtung gleichmäßig zueinander beabstandet angeordnet. Vorzugsweise sind die Verbindungsbereiche 32 zur Verbindung der Druckanschlagsaufnahme 82 mit dem Innenrohr 14 in Umfangsrichtung zwischen den Ausnehmungen 54 angeordnet.

Die Bypassöffnung 68 erstreckt sich beispielhaft von dem Verbindungsbereich 32 der Druckanschlagsaufnahme 82 bis in etwa zur axialen Mitte der Druckanschlagsaufnahme 82. Beispielhaft ist die Bypassöffnung 68 in Druckrichtung zulaufend ausgebildet, sodass sich der Strömungsquerschnitt der Bypassöffnung 68 in Druckrichtung verringert. Beispielhaft weist die Druckanschlagsaufnahme 82 zwei, drei, vier oder mehr Bypassöffnungen 68 auf, die insbesondere identisch ausgebildet sind. Vorzugsweise sind die Bypassöffnungen 68 gegenüberliegend, insbesondere umfangsmäßig um 180° zueinander versetzt, angeordnet. Durch die Bypassöffnung 68 bildet den Bypassweg 44 aus, durch welchen Hydraulikfluid von dem Druckstufenarbeitsraum 56 zwischen dem Kolbenring 30, dem Zusatzkolben 50 und der Innenwand der Druckanschlagsaufnahme 82, in welcher die als Einkerbung ausgebildete Bypassöffnung 68 vorgesehen ist, strömbar ist. Die in Druckrichtung D zulaufende Ausbildung der Bypassöffnung 68 sorgt beispielsweise für eine progressive Dämpfung der Bewegung des Zusatzkolbens 50 in Druckrichtung D, da sich der Strömungsquerschnitt des Bypassweges 44 bei einer Bewegung des Zusatzkolbens 50 in Druckrichtung D verringert.

Fig. 6 zeigt einen Teilausschnitt der Druckanschlagsaufnahme 82 mit dem Kolbenring 30 und dem Federelement 52. Die Druckanschlagsaufnahme 82 weist beispielhaft eine Mehrzahl von Axialanschlägen 64 auf, die beispielhaft als sich radial nach Innen erstreckende Vorsprünge ausgebildet sind und einen Anschlag zur Begrenzung der Bewegung des Kolbenrings 30 in axialer Richtung, insbesondere in Zugrichtung Z, bilden. Die Druckanschlagsaufnahme 82 weist vorzugsweise zumindest einen, zwei, drei oder mehr Axialanschläge 64 auf, die beispielsweise in Umfangsrichtung gleichmäßig zueinander beabstandet angeordnet sind. Die Axialanschläge 64 schließen sich beispielhaft an jeweils eine Ausnehmung 54 in Druckrichtung D an.

### Bezugszeichenliste

- 10: Schwingungsdämpfer
- 12: Außenrohr
- 14: Dämpferrohr / Innenrohr
- 16: Ausgleichsraum
- 18: Arbeitskolben
- 20: Kolbenstange
- 21: Unterbrechung
- 22: erster Arbeitsraum
- 24: zweiter Arbeitsraum
- 26: Dichtung
- 30: Kolbenring
- 32: Verbindungsbereich
- 34: Verschlusspaket
- 36: Bodenstück
- 38: Bodenventil
- 40: erster Ringbereich
- 42: zweiter Ringbereich
- 44: Bypassweg
- 46: Zuganschlag
- 48: Druckanschlagsanordnung
- 50: Zusatzkolben
- 52: Federelement
- 54: Ausnehmung
- 56: Druckstufenarbeitsraum
- 58: Ventilkörper
- 60: Durchlassbohrungen
- 62: Ventilscheiben
- 64: Axialanschlag
- 66: Bypasskanal
- 68: Bypassöffnung in der Druckanschlagsaufnahme
- 70: Wand der Druckanschlagsaufnahme
- 82: Druckanschlagsaufnahme

- Z: Zugrichtung
- D: Druckrichtung

## Patentansprüche

1. Schwingungsdämpfer (10), für ein Fahrzeug, umfassend:
- ein mit Hydraulikfluid gefülltes Dämpferrohr (14),
- einen mit einer Kolbenstange (20) verbundenen Arbeitskolben (18), der innerhalb des Dämpferrohrs (14) hin und her bewegbar angeordnet ist, wobei der Innenraum des Dämpferrohrs (14) durch den Arbeitskolben (18) in einen kolbenstangenseitigen, ersten Arbeitsraum (22) und einen kolbenstangenfernen, zweiten Arbeitsraum (24) aufgeteilt ist,
- einen Zusatzkolben (50), der an der Kolbenstange (20) angebracht ist und
- eine Druckanschlagsanordnung (48) mit einer innerhalb des Dämpferrohrs (14) angebrachten Druckanschlagsaufnahme (82) zur Aufnahme des Zusatzkolbens (50) in der Druckstufe,
- **dadurch gekennzeichnet, dass**
die Druckanschlagsanordnung (48) einen Kolbenring (30) aufweist, der innerhalb der Druckanschlagsaufnahme (82) axial bewegbar angebracht ist und eine Unterbrechung (21) aufweist.

2. Schwingungsdämpfer (10) nach Anspruch 1, wobei die Druckanschlagsanordnung (48) einen Druckstufenarbeitsraum (56) umfasst, der durch den Kolbenring (30) innerhalb der Druckanschlagsaufnahme (56) abgetrennt ist und wobei die Unterbrechung (21) einen Bypasskanal (66) zwischen dem Druckstufenarbeitsraum (56) und dem kolbenstangenfernen Arbeitsraum (24) ausbildet.

3. Schwingungsdämpfer (10) nach einem der vorangehenden Ansprüche, wobei der Kolbenring (30) separat zu dem Zusatzkolben (50) angeordnet ist, sodass der Zusatzkolben (50) außerhalb der Druckanschlagsanordnung (82) relativ zu dem Kolbenring (30) bewegbar angeordnet ist.

4. Schwingungsdämpfer (10) nach einem der vorangehenden Ansprüche, wobei die Druckanschlagsanordnung (48) ein Federelement (52) aufweist, das innerhalb der Druckanschlagsaufnahme (82) angeordnet ist und an dem Kolbenring (30) anliegt.

5. Schwingungsdämpfer (10) nach einem der vorangehenden Ansprüche, wobei die Druckanschlagsaufnahme (82) einen Verbindungsbereich (32) aufweist, an dem die Druckanschlagsaufnahme (82) mit dem Dämpferrohr (14) verbunden ist.

6. Schwingungsdämpfer (10) nach einem der vorangehenden Ansprüche, wobei zwischen der Druckanschlagsaufnahme (82) und dem Dämpferrohr (14) ein Ringraum ausgebildet ist, der von dem Hydraulikfluid durchströmbar ist.

7. Schwingungsdämpfer (10) nach einem der vorangehenden Ansprüche, wobei die Druckanschlagsaufnahme (82) hohlzylinderförmig ausgebildet ist.

8. Schwingungsdämpfer (10) nach einem der vorangehenden Ansprüche, wobei der Kolbenring (30) aus einem Kunststoff ausgebildet ist.

9. Schwingungsdämpfer (10) nach einem der vorangehenden Ansprüche, wobei der Kolbenring (30) einen ersten Ringbereich (40) und einen sich in Druckrichtung (D) daran anschließenden zweiten Ringbereich (42) aufweist und wobei der erste Ringbereich (40) einen geringeren Innendurchmesser aufweist als der zweite Ringbereich (42).

10. Schwingungsdämpfer (10) nach einem der vorangehenden Ansprüche, wobei der Zusatzkolben (50) einen Außendurchmesser aufweist, der geringer ist als der Innendurchmesser der Druckanschlagsaufnahme (82), sodass zwischen der Druckanschlagsaufnahme (82) und dem Zusatzkolben (50) ein Hydraulikfluid strömbar ist.

11. Schwingungsdämpfer (10) nach einem der vorangehenden Ansprüche, wobei der Kolbenring (30) eine Mehrzahl von Ausnehmungen aufweist.

12. Schwingungsdämpfer (10) nach einem der vorangehenden Ansprüche, wobei die Druckanschlagsaufnahme (82) einen Axialanschlag (64) aufweist, der einen Anschlag zur Begrenzung der Bewegung des Kolbenrings (30) in axialer Richtung bildet.

13. Schwingungsdämpfer (10) nach einem der vorangehenden Ansprüche, wobei die Druckanschlagsaufnahme (82) eine Bypassöffnung (68) aufweist, die mit dem Zusatzkolben (50) und dem Kolbenring (30) einen Bypassweg (44) ausbildet.

14. Schwingungsdämpfer (10) nach einem der vorangehenden Ansprüche, wobei die Bypassöffnung (68) derart ausgebildet ist, dass sich ihr Strömungsquerschnitt in Druckrichtung (D) verringert.

15. Schwingungsdämpfer (10) nach einem der vorangehenden Ansprüche, wobei die Druckanschlagsaufnahme (82) zumindest eine oder eine Mehrzahl von Ausnehmungen (54) aufweist, die sich von dem kolbenstangenseitigen Ende der Druckanschlagsaufnahme (82) in axialer Richtung erstrecken.

## Claims

1. A vibration damper (10), for a vehicle, comprising:
- a damper tube (14) filled with hydraulic fluid,
- a working piston (18) connected to a piston rod (20) and which is arranged so that it can move back and forth inside the damper tube (14), wherein the interior of the damper tube (14) is divided by the working piston (18) into a first working chamber (22) on the piston rod side and a second working chamber (24) remote from the piston rod,
- an additional piston (50) which is attached at the piston rod (20), and
- a pressure stop assembly (48) with a pressure stop receptacle (82), attached inside the damper tube (14), for receiving the additional piston (50) in the pressure stage,
- **characterized in that**
the pressure stop assembly (48) has a piston ring (30) which is attached axially movably inside the pressure stop receptacle (82) and has a gap (21).

2. The vibration damper (10) as claimed in claim 1, wherein the pressure stop assembly (48) comprises a pressure stage working chamber (56) which is separated by the piston ring (30) inside the pressure stop receptacle (56) and wherein the gap (21) forms a bypass channel (66) between the pressure stage working chamber (56) and the working chamber (24) remote from the piston rod.

3. The vibration damper (10) as claimed in one of the preceding claims, wherein the piston ring (30) is arranged separately from the additional piston (50) such that the additional piston (50) is arranged so that it can move relative to the piston ring (30) outside the pressure stop assembly (82).

4. The vibration damper (10) as claimed in one of the preceding claims, wherein , the pressure stop assembly (48) has a spring element (52) which is arranged inside the pressure stop receptacle (82) and lies against the piston ring (30).

5. The vibration damper (10) as claimed in one of the preceding claims, wherein the pressure stop receptacle (82) has a connecting region (32) at which the pressure stop receptacle (82) is connected to the damper tube (14).

6. The vibration damper (10) as claimed in one of the preceding claims, wherein an annular chamber through which the hydraulic fluid can flow is formed between the pressure stop receptacle (82) and the damper tube (14).

7. The vibration damper (10) as claimed in one of the preceding claims, wherein die pressure stop receptacle (82) is designed as hollow-cylindrical.

8. The vibration damper (10) as claimed in one of the preceding claims, wherein the piston ring (30) is formed from a plastic.

9. The vibration damper (10) as claimed in one of the preceding claims, wherein the piston ring (30) has a first annular region (40) and a second annular region (42) adjoining it in the pressure direction (D), and wherein the first annular region (40) has a smaller internal diameter than the second annular region (42).

10. The vibration damper (10) as claimed in one of the preceding claims, wherein the additional piston (50) has an external diameter which is smaller than the internal diameter of the pressure stop receptacle (82) such that a hydraulic fluid can flow between the pressure stop receptacle (82) and the additional piston (50).

11. The vibration damper (10) as claimed in one of the preceding claims, wherein the piston ring (30) has a plurality of recesses.

12. The vibration damper (10) as claimed in one of the preceding claims, wherein the pressure stop receptacle (82) has an axial stop (64) which forms a stop for limiting the movement of the piston ring (30) in an axial direction.

13. The vibration damper (10) as claimed in one of the preceding claims, wherein the pressure stop receptacle (82) has a bypass opening (68) which forms a bypass route (44) with the additional piston (50) and the piston ring (30).

14. The vibration damper (10) as claimed in one of the preceding claims, wherein the bypass opening (68) is designed in such a way that its flow cross section reduces in the pressure direction (D).

15. The vibration damper (10) as claimed in one of the preceding claims, wherein the pressure stop receptacle (82) has at least one or a plurality of recesses (54) which extend in an axial direction from that end of the pressure stop receptacle (82) on the piston rod side.

## Revendications

1. Amortisseur de vibrations (10) destiné à un véhicule, comprenant : - un tube d'amortisseur (14) rempli de fluide hydraulique,
- un piston de travail (18) relié à une tige de piston (20) et agencé de manière à pouvoir effectuer un mouvement de va-et-vient à l'intérieur du tube d'amortisseur (14), l'intérieur du tube d'amortisseur (14) étant divisé par le piston de travail (18) en une première chambre de travail (22) du côté de la tige de piston et une deuxième chambre de travail (24) éloignée de la tige de piston,
- un piston supplémentaire (50) fixé à la tige de piston (20), et
- un ensemble de butée de pression (48) comprenant un logement de butée de pression (82), fixé à l'intérieur du tube d'amortisseur (14), destiné à recevoir le piston supplémentaire (50) dans l'étage de pression,
- **caractérisé en ce que**
l'ensemble de butée de pression (48) comporte un segment de piston (30) qui est monté de manière mobile axialement à l'intérieur du logement de butée de pression (82) et qui présente un interstice (21).

2. L'amortisseur de vibrations (10) selon la revendication 1, dans lequel l'ensemble de butée de pression (48) comprend une chambre de travail de l'étage de pression (56) qui est séparée par le segment de piston (30) à l'intérieur du logement de butée de pression (56) et dans lequel l'interstice (21) forme un canal de dérivation (66) entre la chambre de travail de l'étage de pression (56) et la chambre de travail (24) située à l'opposé de la tige de piston.

3. Amortisseur de vibrations (10) selon l'une des revendications précédentes, dans lequel le segment de piston (30) est disposé séparément du piston supplémentaire (50) de telle sorte que le piston supplémentaire (50) soit agencé de manière à pouvoir se déplacer par rapport au segment de piston (30) à l'extérieur de l'ensemble de butée de pression (82).

4. Amortisseur de vibrations (10) selon l'une des revendications précédentes, dans lequel l'ensemble de butée de pression (48) comporte un élément élastique (52) qui est disposé à l'intérieur du logement de butée de pression (82) et qui s'appuie contre le segment de piston (30).

5. Amortisseur de vibrations (10) selon l'une des revendications précédentes, dans lequel le logement de butée de pression (82) comporte une zone de raccordement (32) au niveau de laquelle le logement de butée de pression (82) est raccordé au tube d'amortisseur (14).

6. Amortisseur de vibrations (10) selon l'une des revendications précédentes, dans lequel une chambre annulaire à travers laquelle le fluide hydraulique peut s'écouler est formée entre le logement de butée de pression (82) et le tube d'amortisseur (14).

7. Amortisseur de vibrations (10) selon l'une des revendications précédentes, dans lequel le réceptacle de butée de pression (82) est conçu sous forme de cylindre creux.

8. Amortisseur de vibrations (10) selon l'une des revendications précédentes, dans lequel le segment de piston (30) est réalisé en matière plastique.

9. Amortisseur de vibrations (10) selon l'une des revendications précédentes, dans lequel le segment de piston (30) comporte une première région annulaire (40) et une deuxième région annulaire (42) qui lui est contiguë dans la direction de la pression (D), et dans lequel la première région annulaire (40) présente un diamètre intérieur inférieur à celui de la deuxième région annulaire (42).

10. Amortisseur de vibrations (10) selon l'une des revendications précédentes, dans lequel le piston supplémentaire (50) présente un diamètre extérieur inférieur au diamètre intérieur du logement de butée de pression (82), de sorte qu'un fluide hydraulique peut s'écouler entre le logement de butée de pression (82) et le piston supplémentaire (50).

11. Amortisseur de vibrations (10) selon l'un des revendications précédentes, dans lequel le segment de piston (30) comporte une pluralité d'évidements.

12. Amortisseur de vibrations (10) selon l'une des revendications précédentes, dans lequel le logement de butée de pression (82) comporte une butée axiale (64) qui forme une butée destinée à limiter le déplacement de la bague de piston (30) dans une direction axiale.

13. Amortisseur de vibrations (10) selon l'une des revendications précédentes, dans lequel le logement de butée de pression (82) comporte une ouverture de dérivation (68) qui forme un circuit de dérivation (44) avec le piston supplémentaire (50) et le segment de piston (30).

14. Amortisseur de vibrations (10) selon l'un des revendications précédentes, dans lequel l'ouverture de dérivation (68) est conçue de telle sorte que sa section d'écoulement diminue dans la direction de la pression (D).

15. Amortisseur de vibrations (10) selon l'une des revendications précédentes, dans lequel le logement de butée de pression (82) comporte au moins un ou plusieurs évidements (54) qui s'étendent dans une direction axiale à partir de l'extrémité du logement de butée de pression (82) située du côté de la tige de piston.
